# EUROPÄISCHE PATENTSCHRIFT

(11) **EP 4 418 216 B1**
(45) Veröffentlichungstag und Bekanntmachung des Hinweises auf die Patenterteilung: **23.09.2026**
(21) Anmeldenummer: 24154586.2
(22) Anmeldetag: 30.01.2024
(51) Int. Cl.: G06V 20/52

(54) **VORRICHTUNG UND VERFAHREN ZUM IDENTIFIZIEREN EINES LADUNGSTRÄGERS**
DEVICE AND METHOD FOR IDENTIFYING A CHARGE CARRIER
DISPOSITIF ET PROCÉDÉ D'IDENTIFICATION D'UN PORTEUR DE CHARGE

(30) Priorität: 15.02.2023 DE 102023103608
(43) Veröffentlichungstag der Anmeldung: 21.08.2024
(73) Patentinhaber: STILL GmbH, 22113 Hamburg (DE)
(72) Erfinder: RUDALL, Yan, 22453 Hamburg (DE); ABEL, Bengt, 21335 Lüneburg (DE); SCHÜTHE, Dennis, 21255 Tostedt (DE); HINDESMITH, Lukas, 21244 Buchholz (DE); BAKR, Mohamed, 21073 Hamburg (DE)
(74) Vertreter: Patentship Patentanwaltgesellschaft

(56) Entgegenhaltungen:
- US-A1- 2021 122 052
- RUTINOWSKI JEROME ET AL: "Deep Learning Based Re-Identification of Wooden Euro-pallets", 2022 21ST IEEE INTERNATIONAL CONFERENCE ON MACHINE LEARNING AND APPLICATIONS (ICMLA), IEEE, 12 December 2022 (2022-12-12), pages 113 - 117, XP034314186, DOI: 10.1109/ICMLA55696.2022.00023
- MARKUS KNITT: "Estimating the Pose of a Euro Pallet with an RGB Camera based on Synthetic Training Data Posenschätzung einer Europalette mit einer RGB-Kamera basierend auf synthetischen Trainingsdaten", 12 October 2022 (2022-10-12), XP093168845, Retrieved from the Internet <URL:https://arxiv.org/pdf/2210.06001> [retrieved on 20240531]

## Beschreibung

Die Erfindung betrifft eine Vorrichtung, ein Flurförderzeug und ein Verfahren zum Identifizieren eines Ladungsträgers in einer industriellen Umgebung, insbesondere einem Warenlager.

Für den Transport und die Lagerung von Produkten, Waren und Materialien werden oftmals Ladungsträger, beispielsweise Gitterboxen oder Paletten, insbesondere Europaletten, verwendet. Zur Handhabung derartiger Ladungsträger, beispielsweise in der Intralogistik, d.h. dem innerbetrieblichen Materialfluss, beispielsweise in einem Warenlager, werden in der Regel teilweise automatisierte Flurförderzeuge, beispielsweise Gabelstapler, Industrieroboter und dergleichen eingesetzt. Im Kontext der Intralogistik werden Waren oder Ladungsträger oftmals mittels eindeutiger Identifikationscodes identifiziert. Zur Erfassung der Identifikationscodes können beispielsweise Barcodelesegeräte verwendet werden, die allerdings gezielt auf den Identifikationscode in kurzer Entfernung gerichtet werden müssen.

Aus Rutinowski Jerorme et al: "Deep Learning Based Re-Identification of Wodden Euro-Pallets", 2022 21st IEEE International Conference on Machine Learning and Applications (ICMLA), IEEE, 12. December 2022, Seiten 113-117, XP034314186, DOI: 10.1109/ICMLA55696.2022.00023 ist eine Vorrichtung zur Re-Identifikation von Holz-Paletten bekannt.

Aus Markus Knitt: "Estimation the Pose of a Euro pallet with an RGB Camera based on Synthetic Trainng data Posenschätzung einer Europalette mit einer RGB-Kamera basierend auf synthetischen Trainingsdaten", 12. Oktober 2022, XP093168845 ist eine Posenschätzung einer Europalette mit einer RGB-Kamera basierend auf synthetischen Trainingsdaten bekannt.

Der vorliegenden Erfindung liegt die Aufgabe zugrunde, eine Vorrichtung, ein Flurförderzeug und ein Verfahren zum effizienten Identifizieren eines Ladungsträgers in einer industriellen Umgebung, insbesondere einem Warenlager, bereitzustellen.

Diese Aufgabe wird gemäß einem ersten Aspekt der Erfindung gelöst durch eine Vorrichtung zum Identifizieren eines Ladungsträgers einer Vielzahl von Ladungsträgern in einer industriellen Umgebung, insbesondere einem Warenlager. Jeder Ladungsträger ist mit einem optischen Identifizierungscode versehen, welcher dem jeweiligen Ladungsträger eine Identität zuweist. Die Vorrichtung umfasst eine Kommunikationsschnittstelle, welche ausgebildet ist, ein Bild des Ladungsträgers der Vielzahl von Ladungsträgern von einer Bilderfassungseinrichtung zu erhalten. Die Vorrichtung umfasst ferner einen Prozessor, welcher ausgebildet ist, auf der Grundlage des Bildes des Ladungsträgers einen Feature-Vektor, d.h. eine Vielzahl von Merkmalen, des Ladungsträgers zu bestimmen. Die Vorrichtung umfasst ferner einen Speicher, welcher ausgebildet ist, für jeden der Vielzahl von Ladungsträgern wenigstens einen Referenz-Feature-Vektor bereitzustellen. Der Prozessor ist ferner ausgebildet, auf der Grundlage eines Vergleichs zwischen dem Feature-Vektor und der Vielzahl von Referenz-Feature-Vektoren die Identität des Ladungsträgers zu bestimmen. Der Prozessor ist ausgebildet, auf der Grundlage des Bildes des Ladungsträgers ferner eine Pose des Ladungsträgers zu bestimmen und auf der Grundlage des Bildes des Ladungsträgers und der Pose des Ladungsträgers den Feature-Vektor des Ladungsträgers zu bestimmen. Der Speicher ist ausgebildet, für jeden der Vielzahl von Ladungsträgern einen jeweiligen Referenz-Feature-Vektor für eine Referenzpose des jeweiligen Ladungsträgers bereitzustellen. Der Prozessor ist ausgebildet ist, den Feature-Vektor des Ladungsträgers auf der Grundlage des Bildes des Ladungsträgers und der Pose des Ladungsträgers für die Referenzpose zu bestimmen. Der Prozessor ist ferner ausgebildet, für einen noch nicht erfassten Ladungsträger, auf der Grundlage eines Bildes des noch nicht erfassten Ladungsträgers einen Referenz-Feature-Vektor des noch nicht erfassten Ladungsträgers zu bestimmen und eine durch den Identifizierungscode, insbesondere optischen Identifizierungscode zugewiesene Identität zusammen mit dem Referenz-Feature-Vektor des noch nicht erfassten Ladungsträgers in dem Speicher abzuspeichern.

In einer Ausführungsform ist der Prozessor ausgebildet, ein neuronales Netz zu implementieren, wobei das neuronale Netz ausgebildet ist, auf der Grundlage des Bildes des Ladungsträgers den Feature-Vektor des Ladungsträgers zu bestimmen.

In einer Ausführungsform ist das neuronale Netz ferner ausgebildet, auf der Grundlage eines Vergleichs zwischen dem Feature-Vektor und der Vielzahl von Referenz-Feature-Vektoren die Identität des Ladungsträgers zu bestimmen.

Gemäß der Erfindung ist der Prozessor ausgebildet, auf der Grundlage des Bildes des Ladungsträgers ferner eine Pose des Ladungsträgers zu bestimmen und auf der Grundlage des Bildes des Ladungsträgers und der Pose des Ladungsträgers den Feature-Vektor des Ladungsträgers zu bestimmen.

Gemäß der Erfindung ist der Speicher ausgebildet, für jeden der Vielzahl von Ladungsträgern wenigstens einen jeweiligen Referenz-Feature-Vektor für wenigstens eine Referenzpose, d.h. Referenzposition und Referenzorientierung, des jeweiligen Ladungsträgers bereitzustellen und der Prozessor ist ausgebildet, den Feature-Vektor des Ladungsträgers auf der Grundlage des Bildes des Ladungsträgers und der Pose des Ladungsträgers für die Referenzpose zu bestimmen.

Gemäß der Erfindung ist der Prozessor ferner ausgebildet, für einen noch nicht erfassten Ladungsträger, auf der Grundlage eines Bildes des noch nicht erfassten Ladungsträgers einen Referenz-Feature-Vektor des noch nicht erfassten Ladungsträgers zu bestimmen und eine durch den optischen Identifizierungscode zugewiesene Identität zusammen mit dem Referenz-Feature-Vektor des noch nicht erfassten Ladungsträgers in dem Speicher abzuspeichern.

In einer Ausführungsform ist der optische Identifizierungscode ein Matrixcode oder ein Barcode.

Gemäß einem zweiten Aspekt der Erfindung wird ein Flurförderzeug oder ein Industrieroboter bereitgestellt, wobei die Vorrichtung gemäß dem ersten Aspekt Teil des Flurförderzeug oder des Industrieroboters ist. Das Flurförderzeug oder der Industrieroboter kann ferner eine Bilderfassungseinrichtung umfassen, welche ausgebildet ist, das Bild des Ladungsträgers zu erfassen.

In einer Ausführungsform ist das Flurförderzug oder der Industrieroboter ausgebildet ist, autonom auf der Grundlage der Identifizierung des Ladungsträgers eine Bewegungsroute des Flurförderzeugs oder des Industrieroboters zu bestimmen.

Gemäß einem dritten Aspekt der Erfindung wird ein Verfahren zum Identifizieren eines Ladungsträgers einer Vielzahl von Ladungsträgern in einer industriellen Umgebung, insbesondere einem Warenlager, bereitgestellt. Jeder Ladungsträger ist mit einem optischen Identifizierungscode versehen, welcher dem jeweiligen Ladungsträger eine Identität zuweist. Das Verfahren gemäß dem dritten Aspekt der Erfindung umfasst die folgenden Schritte:
Erhalten eines Bildes des Ladungsträgers der Vielzahl von Ladungsträgern von einer Bilderfassungseinrichtung;
Bestimmen eines Feature-Vektors des Ladungsträgers auf der Grundlage des Bildes des Ladungsträgers;
Bereitstellen eines jeweiligen Referenz-Feature-Vektors für jeden der Vielzahl von Ladungsträgern;
Bestimmen der Identität des Ladungsträgers auf der Grundlage eines Vergleichs zwischen dem Feature-Vektor und der Vielzahl von Referenz-Feature-Vektoren; Bestimmen einer Pose des Ladungsträgers auf der Grundlage des Bildes des Ladungsträgers;
Bestimmen des Feature-Vektors des Ladungsträgers auf der Grundlage des Bildes des Ladungsträgers und der Pose des Ladungsträgers;
Bereitstellen eines jeweiligen Referenz-Feature-Vektors für eine Referenzpose des jeweiligen Ladungsträgers für jeden der Vielzahl von Ladungsträgern;
Bestimmen des Feature-Vektors des Ladungsträgers auf der Grundlage des Bildes des Ladungsträgers und der Pose des Ladungsträgers für die Referenzpose; und
Bestimmen für einen noch nicht erfassten Ladungsträger eines Referenz-Feature-Vektors des noch nicht erfassten Ladungsträgers auf der Grundlage eines Bildes des noch nicht erfassten Ladungsträgers und Abspeichern einer durch den Identifizierungscode, insbesondere optischen Identifizierungscode zugewiesene Identität zusammen mit dem Referenz-Feature-Vektor des noch nicht erfassten Ladungsträgers in dem Speicher.

Das Verfahren gemäß dem dritten Aspekt der Erfindung kann mittels der Vorrichtung gemäß dem ersten Aspekt der Erfindung durchgeführt werden. Daher ergeben sich weitere mögliche Ausführungsformen des Verfahrens gemäß dem dritten Aspekt der Erfindung aus den vorstehend und nachstehend beschriebenen weiteren Ausführungsformen der Vorrichtung gemäß dem ersten Aspekt der Erfindung.

Weitere Vorteile und Einzelheiten der Erfindung werden beispielhaft anhand der in den schematischen Figuren dargestellten Ausführungsbeispielen näher erläutert. Hierbei zeigt:
Figur 1 eine schematische Darstellung einer erfindungsgemäßen Vorrichtung zum Identifizieren eines Ladungsträgers einer Vielzahl von Ladungsträgern in einer industriellen Umgebung;
Figur 2a eine schematische Darstellung einer Auswertung eines Bildes durch eine erfindungsgemäße Vorrichtung in einem Scanvorgang;
Figur 2b zeigt eine Auswertung eines Bildes durch eine erfindungsgemäße Vorrichtung in einem Erfassungsvorgang; und
Figur 3 ein Flussdiagramm, welches Schritte eines Verfahrens zum Identifizieren eines Ladungsträgers einer Vielzahl von Ladungsträgern in einer industriellen Umgebung zeigt.

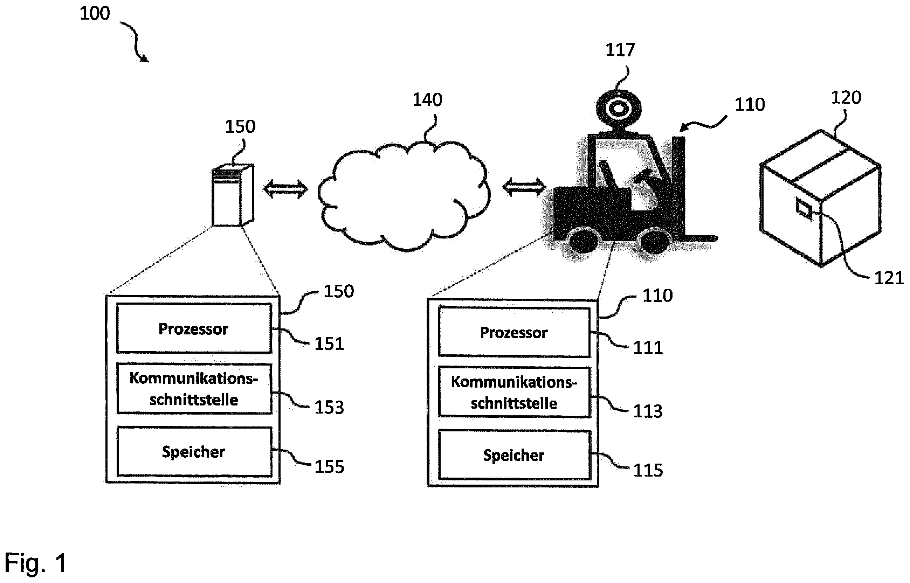

Figur 1 zeigt eine schematische Darstellung einer erfindungsgemäßen Vorrichtung 110, 150 zum Identifizieren eines Ladungsträgers 120 einer Vielzahl von Ladungsträgern in einer industriellen Umgebung 100, insbesondere einem Warenlager. Jeder Ladungsträger 120 ist mit einem optischen Identifizierungscode 121 versehen, welcher dem jeweiligen Ladungsträger 120 eine Identität zuweist. Bei dem optischen Identifizierungscode 121 kann es sich beispielsweise um einen Barcode, eine Nummer oder einen Matrixcode handeln. Alternativ oder zusätzlich können die Ladungsträger 120 auch mit anderen Identifizierungscodes identifizierbar sein, wie beispielsweise über RFID-Tags oder NFC-Tags, mit denen eine eindeutige Identitätszuweisung der Ladungsträger 120 möglich ist.

Bei der in Figur 1 dargestellten Vorrichtung 110, 150 kann es sich beispielsweise um einen Industrie-PC 150 oder einen Cloud-Server 150, insbesondere einen Edge-Cloud-Server 150, handeln. In einer weiteren Ausführungsform kann die Vorrichtung 110, 150 als Teil eines Flurförderzeugs, beispielsweise eines Gabelstaplers, und/oder Teil eines Industrieroboters, beispielsweise eines Pickers, ausgebildet sein. Die Umgebung 100 kann beispielsweise eine Vielzahl von Flurförderzeugen aufweisen. Die Vielzahl von Flurförderzeugen in der Umgebung 100 können beispielsweise jeweils eine Vorrichtung 110 aufweisen. Die jeweiligen Vorrichtungen 110, 150 in der Umgebung 100 können beispielsweise über die jeweiligen Kommunikationsschnittstellen 113, 153 miteinander verbunden sein.

Die Kommunikationsschnittstelle 113, 153 der Vorrichtung 110, 150 kann ausgebildet sein, drahtlos und/oder drahtgebunden mit den Flurförderzeugen und/oder Industrierobotern, weiteren Vorrichtungen 110, 150 und/oder zumindest einer Bilderfassungseinrichtung 117 zu kommunizieren. Beispielsweise kann die Kommunikationsschnittstelle 113, 153 der Vorrichtung 110, 150 ausgebildet sein, über ein WLAN 140 und/oder das Internet 140 zu kommunizieren.

Wie in der Figur 1 dargestellt, umfasst die Vorrichtung 110, 150 einen Prozessor 111, 151, eine Kommunikationsschnittstelle 113, 153 und einen, insbesondere nichtflüchtigen, Speicher 115, 155. Der Speicher 115, 155 kann ausgebildet sein, Daten und ausführbaren Programmcode zu speichern, der, wenn von dem Prozessor 111, 151 der Vorrichtung 110, 150 ausgeführt, den Prozessor 111, 151 veranlasst, die im Folgenden beschriebenen Funktionen, Operationen und Verfahren durchzuführen.

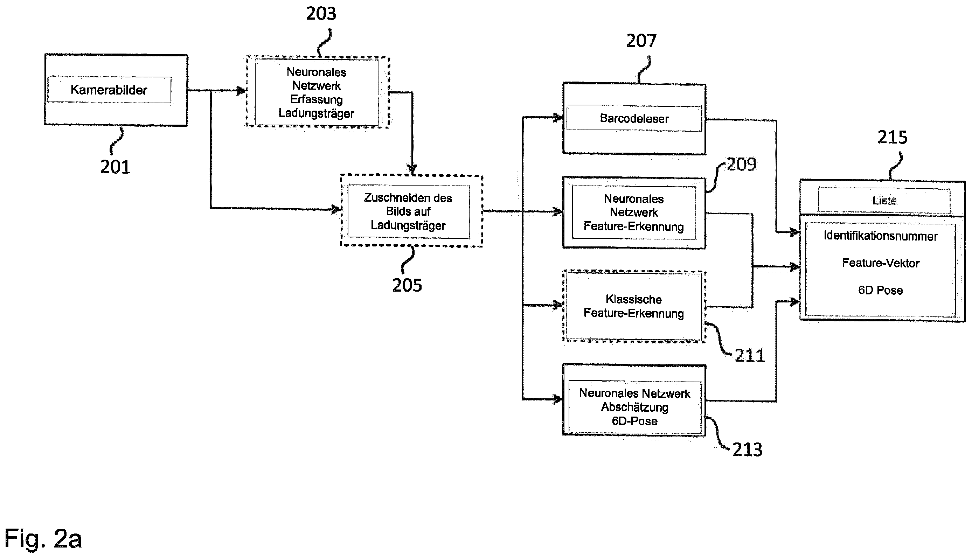

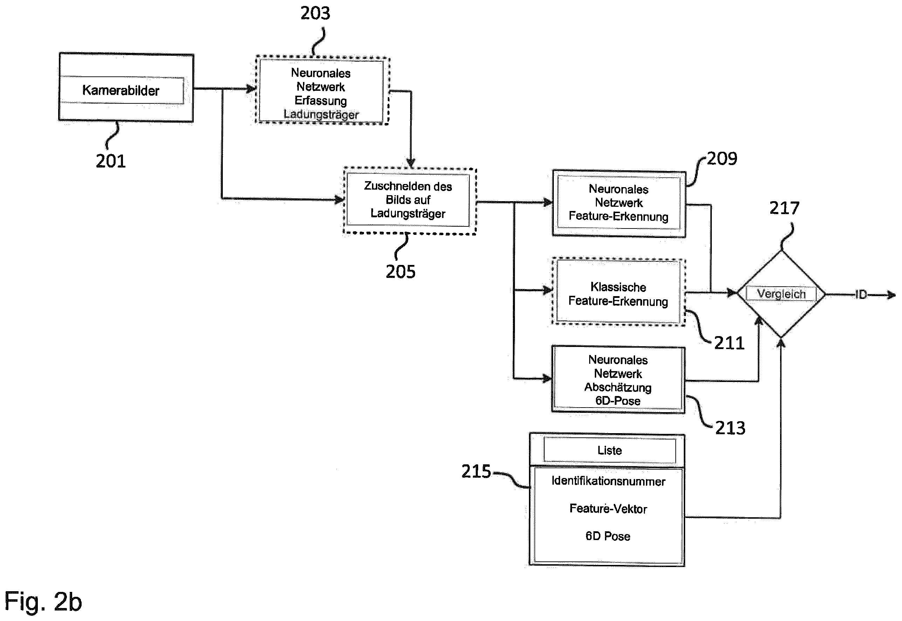

Wie dies nachstehend unter weiterer Bezugnahme auf die Figur 2a und 2b im Detail beschrieben wird, ist die Kommunikationsschnittstelle 113, 153 der Vorrichtung 110, 150 ausgebildet ist, ein Bild 201 des Ladungsträgers 120 der Vielzahl von Ladungsträgern von der Bilderfassungseinrichtung 117, insbesondere einer 2D-Kamera 117, zu erhalten.

Das Flurförderzeug oder der Industrieroboter kann beispielsweise die Bilderfassungseinrichtung 117 umfassen, welche ausgebildet ist, das Bild 201 des Ladungsträgers 120 zu erfassen. Beispielsweise kann das Bild 201 zusätzlich auch von einer weiteren Bilderfassungseinrichtung eines weiteren Flurförderzeugs, eines weiteren Industrieroboters und/oder einer stationären Bilderfassungseinrichtung der Umgebung 100 erfasst werden, um zumindest ein zusätzliches Bild 201 mit zumindest einer anderen Pose des Ladungsträgers 120 zu erhalten. Das Bild 201, und insbesondere auch das zumindest eine zusätzliche Bild 201, kann dann an die Vorrichtung 110, 150 gesendet werden.

Der Prozessor 111, 151 der Vorrichtung 110, 150 ist ausgebildet, auf der Grundlage des Bildes 201, und insbesondere auch auf Grundlage des zumindest einen zusätzlichen Bildes 201, des Ladungsträgers 120 einen Feature-Vektor, d.h. eine Vielzahl von Merkmalen 215, des Ladungsträgers 120 zu bestimmen. Der Speicher 115, 155 der Vorrichtung 110, 150 ist ausgebildet, für jeden der Vielzahl von Ladungsträgern wenigstens einen Referenz-Feature-Vektor bereitzustellen.

Der Prozessor 111, 151 ist ferner ausgebildet, auf der Grundlage eines Vergleichs 217 zwischen dem Feature-Vektor und der Vielzahl von Referenz-Feature-Vektoren die Identität des Ladungsträgers 120 zu bestimmen.

Figur 2a zeigt eine schematische Darstellung einer Auswertung des Bildes 201 durch die erfindungsgemäße Vorrichtung 110, 150 in einem Scanvorgang. Das Bild 201 kann hierbei in einer kurzen Entfernung, beispielsweise unter 1m, zu dem Ladungsträger 120 aufgenommen sein.

Wie in dem Schritt 203 der Figur 2a dargestellt, kann ein durch den Prozessor 111, 151 der Vorrichtung 110, 150 implementiertes erstes neuronales Netz ausgebildet sein, den Ladungsträger 120 in dem Bild 201 zu erfassen.

Wie in dem Schritt 205 der Figur 2a dargestellt, kann der Prozessor 111, 151 der Vorrichtung 110, 150 auf den Schritt 203 der Figur 2a folgend ausgebildet sein, das Bild 201 auf den Ladungsträger 120 zuzuschneiden, beispielsweise indem Abschnitte des Bildes 201 entfernt werden, die nicht dem Ladungsträger 120 zuzuordnen sind und/oder diesen nicht zumindest teilweise darstellen. Somit kann ein Bereich von Interesse (im Englischen auch als ROI, Region of Interest, bezeichnet) definiert werden.

Wie in dem Schritt 207 der Figur 2a dargestellt, kann der Prozessor 111, 151 der Vorrichtung 110, 150 mittels eines Barcodelesers den Identifizierungscode 201 aus dem Bild 201 erfassen. Alternativ kann der Identifizierungscode 201 auch von einem Benutzer manuell eingegeben werden, beispielsweise per Tatstatur oder Spracheingabe, insbesondere wenn es sich nicht um einen optischen Identifizierungscode 201 handelt.

Wie in dem Schritt 209 der Figur 2a dargestellt, kann ein durch den Prozessor 111, 151 der Vorrichtung 110, 150 implementiertes zweites neuronales Netz ausgebildet sein, auf der Grundlage des Bildes 201 des Ladungsträgers 120 den Referenz-Feature-Vektor des Ladungsträgers 120 zu bestimmen.

Wie in dem Schritt 211 der Figur 2a dargestellt, kann zusätzlich oder alternativ zu dem Schritt 201 der Figur 2a der Prozessor 111, 151 der Vorrichtung 110, 150, insbesondere das zweite neuronale Netz, ausgebildet sein, über klassische Bildverarbeitungsverfahren, wie beispielsweise HASH oder ORB, auf der Grundlage des Bildes 201 des Ladungsträgers 120 den Referenz-Feature-Vektor des Ladungsträgers 120 zu bestimmen.

Wie in dem Schritt 213 der Figur 2a dargestellt, kann ein durch den Prozessor 111, 151 der Vorrichtung 110, 150 implementiertes drittes neuronales Netz ausgebildet sein, Tiefeninformationen der Umgebung 100 mittels der Bilderfassungseinrichtung 117, insbesondere 2D Kamera, zu schätzen. Zusammen mit der Region von Interesse (ROI) und den Tiefeninformationen kann das dritte neuronale Netz ausgebildet sein, die Lage des Ladungsträgers 120 im Bild 201 zu erfassen. Der Prozessor 111, 151, insbesondere das dritte neuronale Netz, kann ausgebildet sein, auf der Grundlage des Bildes 201 des Ladungsträgers 120 eine Referenz-Pose, insbesondere eine 6D-Pose, des Ladungsträgers 120 zu bestimmen. Auf der Grundlage der Referenz-Pose des Ladungsträgers 120 kann der Prozessor 111, 151 ausgebildet sein, den Referenz-Feature-Vektor des Ladungsträgers 120 zu bestimmen.

Die Merkmale 215 des Ladungsträgers 120 zur Re-Identifikation des Ladungsträgers 120 können somit den Identifikationscode 121 und den Referenz-Feature-Vektor, sowie insbesondere die Referenz-Pose des Ladungsträgers 120, umfassen. Ferner können zur Re-Identifikation des Ladungsträgers 120 die Merkmale 215 des Ladungsträgers 120 zumindest einen weiteren Referenz-Feature-Vektor, sowie insbesondere eine korrespondierende, zu der Referenz-Pose verschiedene, weitere Referenz-Pose des Ladungsträgers 120, umfassen. Die Merkmale 215 können dann in dem Speicher 115, 155 der Vorrichtung 110, 150 abgespeichert und/oder aktualisiert werden.

Ändert sich der Identifikationscode 121 des Ladungsträgers 120, beispielsweise bei einer Umetikettierung der Ware des Ladungsträgers 120, dann kann der Schritt 207 der Figur 2a wiederholt werden und der Datensatz zu den Merkmalen 215 in dem Speicher 115, 155 aktualisiert werden.

Figur 2b zeigt eine schematische Darstellung eine Auswertung des Bildes 201 durch die erfindungsgemäße Vorrichtung 110, 150 in einem Erfassungsvorgang. Das Bild 201 kann hierbei in einer größeren Entfernung, beispielsweise größer als 1m, zu dem Ladungsträger 120 aufgenommen sein. Die Entfernung kann dabei beliebig groß sein, sofern die Auflösung der Bilderfassungsvorrichtung 117 und somit auch des Bildes 201 entsprechend hoch genug ist, um die nachfolgenden Schritte zu realisieren.

Wie in dem Schritt 203 der Figur 2b dargestellt, kann ein durch den Prozessor 111, 151 der Vorrichtung 110, 150 implementiertes erstes neuronales Netz ausgebildet sein, den Ladungsträger 120 in dem Bild 201 zu erfassen.

Wie in dem Schritt 205 der Figur 2b dargestellt, kann der Prozessor 111, 151 der Vorrichtung 110, 150 auf den Schritt 203 der Figur 2b folgend ausgebildet sein, das Bild 201 auf den Ladungsträger 120 zuzuschneiden, beispielsweise indem Abschnitte des Bildes 201 entfernt werden, die nicht dem Ladungsträger 120 zuzuordnen sind und/oder diesen nicht zumindest teilweise darstellen. Somit kann ein Bereich von Interesse (im Englischen auch als ROI, Region of Interest, bezeichnet) definiert werden.

Wie in dem Schritt 209 der Figur 2b dargestellt, kann das durch den Prozessor 111, 151 der Vorrichtung 110, 150 implementierte zweite neuronale Netz ausgebildet sein, auf der Grundlage des Bildes 201 des Ladungsträgers 120 auch den Feature-Vektor des Ladungsträgers 120 zu bestimmen.

Wie in dem Schritt 211 der Figur 2b dargestellt, kann zusätzlich oder alternativ zu dem Schritt 201 der Figur 2b der Prozessor 111, 151 der Vorrichtung 110, 150, insbesondere das zweite neuronale Netz, ausgebildet sein, über klassische Bildverarbeitungsverfahren, wie beispielsweise HASH oder ORB, auf der Grundlage des Bildes 201 des Ladungsträgers 120 den Feature-Vektor des Ladungsträgers 120 zu bestimmen.

Wie in dem Schritt 213 der Figur 2b dargestellt, kann das durch den Prozessor 111, 151 der Vorrichtung 110, 150 implementierte dritte neuronale Netz ausgebildet sein, Tiefeninformationen der Umgebung 100 mittels der Bilderfassungseinrichtung 117, insbesondere 2D Kamera, zu schätzen. Zusammen mit der Region von Interesse (ROI) und den Tiefeninformationen kann das dritte neuronale Netz ausgebildet sein, die Lage des Ladungsträgers 120 im Bild 201 zu erfassen. Der Prozessor 111, 151, insbesondere das dritte neuronale Netz, kann ausgebildet sein, auf der Grundlage des Bildes 201 des Ladungsträgers 120 eine Pose, insbesondere eine 6D-Pose, des Ladungsträgers 120 zu bestimmen. Auf der Grundlage der Pose des Ladungsträgers 120 kann der Prozessor 111, 151 ausgebildet sein, den Feature-Vektor des Ladungsträgers 120 zu bestimmen.

Wie in dem Schritt 217 der Figur 2b dargestellt, kann der Prozessor 111, 151 ausgebildet sein, die Merkmale 215 aus dem Speicher 115, 155 auszulesen und kann der Prozessor 111, 151, insbesondere das zweite neuronale Netz, ausgebildet sein, auf der Grundlage des Vergleichs 217 zwischen dem Feature-Vektor und der Vielzahl von Referenz-Feature-Vektoren die Identität des Ladungsträgers 120 zu bestimmen.

Beispielsweise kann der Prozessor 111, 151 ausgebildet sein, denjenigen Referenz-Vektor zur Identitätsbestimmung des Ladungsträgers 120 auszuwählen, dessen entsprechende Referenz-Pose der in dem Schritt 213 der Figur 2b ermittelten Pose des Ladungsträgers am ähnlichsten ist. Beispielsweise kann der Prozessor 111, 151 den Vergleich 217 kontinuierlich durchführen und bei Unterschreitung einer Toleranzschwelle die Identität des Ladungsträgers 120 bestimmen.

Das erste neuronale Netz, das zweite neuronale Netz und/oder das dritte neuronale Netz können beispielsweise ein gemeinsames neuronales Netz bilden. Das zweite neuronale Netz kann beispielsweise ein siamesisches neuronales Netz (im Englischen auch als "Siamese Neural Network" bezeichnet) sein. Mittels der in Figur 2a dargestellten Schritte können die entsprechenden neuronalen Netze trainiert werden.

Gemäß einem beispielhaften Anwendungsfall der Vorrichtung 110, 150 kann ein Flurförderfahrzeug einen Fahrtauftrag erhalten, einen bestimmten Ladungsträgers 120 in einem Warenlager, d.h. der Umgebung 100, zu transportieren. Mittels der zur Figur 2b beschriebenen Schritte können die Ladungsträger 120 aus großen Entfernungen und beliebigen Lagen identifiziert werden. Daher muss das Flurförderfahrzeug nicht aufwändig nach der richtigen Ladung suchen in dem es Ladungen mit einem Barcodescanner aus geringen Entfernungen sucht. Somit können auch autonome Fahrzeuge in der Lage sein, effiziente Pfade aus größeren Entfernungen zum richtigen Ziel zu planen und den Aufnahmeprozess dabei schon zu berücksichtigen.

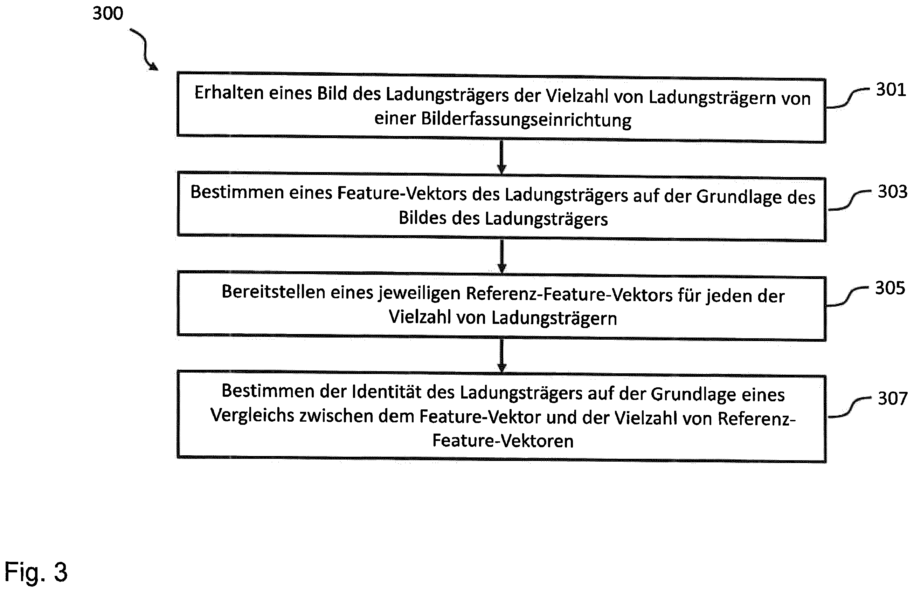

Figur 3 zeigt ein Flussdiagramm, welches Schritte eines Verfahrens 300 zum Identifizieren des Ladungsträgers 120 der Vielzahl von Ladungsträgern in der industriellen Umgebung 100, insbesondere dem Warenlager, zeigt. Jeder Ladungsträger 120 ist mit einem optischen Identifizierungscode 121 versehen, welcher dem jeweiligen Ladungsträger 120 eine Identität zuweist.

Das Verfahren 300 umfasst einen ersten Schritt 301 eines Erhaltens eines Bildes 201 des Ladungsträgers 120 der Vielzahl von Ladungsträgern von einer Bilderfassungseinrichtung 117.

Das Verfahren 300 umfasst ferner einen zweiten Schritt 303 eines Bestimmens eines Feature-Vektors des Ladungsträgers 120 auf der Grundlage des Bildes 201 des Ladungsträgers 120.

Das Verfahren 300 umfasst ferner einen dritten Schritt 305 eines Bereitstellens eines jeweiligen Referenz-Feature-Vektors für jeden der Vielzahl von Ladungsträgern.

Das Verfahren 300 umfasst ferner einen vierten Schritt 307 eines Bestimmens der Identität des Ladungsträgers 120 auf der Grundlage eines Vergleichs 217 zwischen dem Feature-Vektor und der Vielzahl von Referenz-Feature-Vektoren.

Das Verfahren 300 kann mittels der vorstehend im Detail beschriebenen Vorrichtung 110, 150 durchgeführt werden. Daher ergeben sich weitere mögliche Ausführungsformen des Verfahrens 300 aus den vorstehend und nachstehend beschriebenen weiteren Ausführungsformen der Vorrichtung 110, 150.

## Patentansprüche

1. Vorrichtung (110, 150) zum Identifizieren eines Ladungsträgers (120) einer Vielzahl von Ladungsträgern in einer industriellen Umgebung (100), insbesondere einem Warenlager, wobei jeder Ladungsträger (120) mit einem Identifizierungscode, insbesondere einem optischen Identifizierungscode (121) versehen ist, welcher dem jeweiligen Ladungsträger (120) eine Identität zuweist, wobei die Vorrichtung (110, 150) umfasst:
eine Kommunikationsschnittstelle (113, 153), welche ausgebildet ist, ein Bild (201) des Ladungsträgers (120) der Vielzahl von Ladungsträgern von einer Bilderfassungseinrichtung (117) zu erhalten;
einen Prozessor (111, 151), welcher ausgebildet ist, auf der Grundlage des Bildes (201) des Ladungsträgers (120) einen Feature-Vektor des Ladungsträgers (120) zu bestimmen; und
einen Speicher (115, 155), welcher ausgebildet ist, für jeden der Vielzahl von Ladungsträgern einen Referenz-Feature-Vektor bereitzustellen;
wobei der Prozessor (111, 151) ferner ausgebildet ist, auf der Grundlage eines Vergleichs (217) zwischen dem Feature-Vektor und der Vielzahl von Referenz-Feature-Vektoren die Identität des Ladungsträgers (120) zu bestimmen,
wobei der Prozessor (111, 151) ausgebildet ist, auf der Grundlage des Bildes (201) des Ladungsträgers (120) ferner eine Pose des Ladungsträgers (120) zu bestimmen und auf der Grundlage des Bildes (201) des Ladungsträgers (120) und der Pose des Ladungsträgers (120) den Feature-Vektor des Ladungsträgers (120) zu bestimmen, und
wobei der Speicher (115, 155) ausgebildet ist, für jeden der Vielzahl von Ladungsträgern einen jeweiligen Referenz-Feature-Vektor für eine Referenzpose des jeweiligen Ladungsträgers (120) bereitzustellen und wobei der Prozessor (111, 151) ausgebildet ist, den Feature-Vektor des Ladungsträgers (120) auf der Grundlage des Bildes (201) des Ladungsträgers (120) und der Pose des Ladungsträgers (120) für die Referenzpose zu bestimmen,
wobei der Prozessor (111, 151) ferner ausgebildet ist, für einen noch nicht erfassten Ladungsträger (120), auf der Grundlage eines Bildes (201) des noch nicht erfassten Ladungsträgers (120) einen Referenz-Feature-Vektor des noch nicht erfassten Ladungsträgers (120) zu bestimmen und eine durch den Identifizierungscode, insbesondere optischen Identifizierungscode (121) zugewiesene Identität zusammen mit dem Referenz-Feature-Vektor des noch nicht erfassten Ladungsträgers (120) in dem Speicher (115, 155) abzuspeichern.

2. Vorrichtung (110, 150) nach Anspruch 1, wobei der Prozessor (111, 151) ausgebildet ist, ein neuronales Netz zu implementieren, wobei das neuronale Netz ausgebildet ist, auf der Grundlage des Bildes (201) des Ladungsträgers (120) den Feature-Vektor des Ladungsträgers (120) zu bestimmen.

3. Vorrichtung (110, 150) nach Anspruch 2, wobei das neuronale Netz ferner ausgebildet, auf der Grundlage eines Vergleichs (217) zwischen dem Feature-Vektor und der Vielzahl von Referenz-Feature-Vektoren die Identität des Ladungsträgers (120) zu bestimmen.

4. Vorrichtung (110, 150) nach einem der vorhergehenden Ansprüche, wobei der optische Identifizierungscode (121) ein Matrixcode oder ein Barcode ist.

5. Flurförderzeug oder Industrieroboter mit einer Vorrichtung (110, 150) nach einem der vorstehenden Ansprüche, wobei das Flurförderzeug oder der Industrieroboter ferner eine Bilderfassungseinrichtung (117) umfasst, welche ausgebildet ist, das Bild (201) des Ladungsträgers (120) zu erfassen.

6. Flurförderzeug oder Industrieroboter nach Anspruch 5, wobei das Flurförderzug oder der Industrieroboter ausgebildet ist, autonom auf der Grundlage der Identifizierung des Ladungsträgers (120) eine Bewegungsroute des Flurförderzeugs oder des Industrieroboters zu bestimmen.

7. Verfahren (300) zum Identifizieren eines Ladungsträgers (120) einer Vielzahl von Ladungsträgern in einer industriellen Umgebung (100), insbesondere einem Warenlager, wobei jeder Ladungsträger (120) mit einem Identifizierungscode, insbesondere einem optischen Identifizierungscode (121) versehen ist, welcher dem jeweiligen Ladungsträger (120) eine Identität zuweist, wobei das Verfahren (300) umfasst:
Erhalten (301) eines Bildes (201) des Ladungsträgers (120) der Vielzahl von Ladungsträgern von einer Bilderfassungseinrichtung (117);
Bestimmen (303) eines Feature-Vektors des Ladungsträgers (120) auf der Grundlage des Bildes (201) des Ladungsträgers (120);
Bereitstellen (305) eines jeweiligen Referenz-Feature-Vektors für jeden der Vielzahl von Ladungsträgern;
Bestimmen (307) der Identität des Ladungsträgers (120) auf der Grundlage eines Vergleichs (217) zwischen dem Feature-Vektor und der Vielzahl von Referenz-Feature-Vektoren;
Bestimmen einer Pose des Ladungsträgers (120) auf der Grundlage des Bildes (201) des Ladungsträgers (120);
Bestimmen des Feature-Vektors des Ladungsträgers (120) auf der Grundlage des Bildes (201) des Ladungsträgers (120) und der Pose des Ladungsträgers (120);
Bereitstellen eines jeweiligen Referenz-Feature-Vektors für eine Referenzpose des jeweiligen Ladungsträgers (120) für jeden der Vielzahl von Ladungsträgern;
Bestimmen des Feature-Vektors des Ladungsträgers (120) auf der Grundlage des Bildes (201) des Ladungsträgers (120) und der Pose des Ladungsträgers (120) für die Referenzpose; und
Bestimmen für einen noch nicht erfassten Ladungsträger (120) eines Referenz-Feature-Vektors des noch nicht erfassten Ladungsträgers (120) auf der Grundlage eines Bildes (201) des noch nicht erfassten Ladungsträgers (120) und Abspeichern einer durch den Identifizierungscode, insbesondere optischen Identifizierungscode (121) zugewiesene Identität zusammen mit dem Referenz-Feature-Vektor des noch nicht erfassten Ladungsträgers (120) in dem Speicher (115, 155).

## Claims

1. Apparatus (110, 150) for identifying a load carrier (120) of a multiplicity of load carriers in an industrial environment (100), in particular a warehouse, wherein each load carrier (120) is provided with an identification code, in particular an optical identification code (121), which assigns an identity to the respective load carrier (120), wherein the apparatus (110, 150) comprises:
a communication interface (113, 153) which is designed to receive an image (201) of the load carrier (120) of the multiplicity of load carriers from an image capture device (117);
a processor (111, 151) which is designed to determine a feature vector of the load carrier (120) on the basis of the image (201) of the load carrier (120); and
a memory (115, 155) which is designed to provide a reference feature vector for each of the multiplicity of load carriers;
wherein the processor (111, 151) is further designed to determine the identity of the load carrier (120) on the basis of a comparison (217) between the feature vector and the multiplicity of reference feature vectors,
wherein the processor (111, 151) is designed to further determine a pose of the load carrier (120) on the basis of the image (201) of the load carrier (120) and to determine the feature vector of the load carrier (120) on the basis of the image (201) of the load carrier (120) and the pose of the load carrier (120), and
wherein the memory (115, 155) is designed to provide a respective reference feature vector for a reference pose of the respective load carrier (120) for each of the multiplicity of load carriers, and wherein the processor (111, 151) is designed to determine the feature vector of the load carrier (120) on the basis of the image (201) of the load carrier (120) and the pose of the load carrier (120) for the reference pose,
wherein the processor (111, 151) is further designed to determine, for a load carrier (120) that has not yet been detected, a reference feature vector of the load carrier (120) that has not yet been detected on the basis of an image (201) of the load carrier (120) that has not yet been detected and to store an identity assigned by the identification code, in particular the optical identification code (121), together with the reference feature vector of the load carrier (120) that has not yet been detected in the memory (115, 155).

2. Apparatus (110, 150) according to Claim 1, wherein the processor (111, 151) is designed to implement a neural network, wherein the neural network is designed to determine the feature vector of the load carrier (120) on the basis of the image (201) of the load carrier (120).

3. Apparatus (110, 150) according to Claim 2, wherein the neural network is further designed to determine the identity of the load carrier (120) on the basis of a comparison (217) between the feature vector and the multiplicity of reference feature vectors.

4. Apparatus (110, 150) according to one of the preceding claims, wherein the optical identification code (121) is a matrix code or a barcode.

5. Industrial truck or industrial robot having an apparatus (110, 150) according to one of the preceding claims, wherein the industrial truck or the industrial robot further comprises an image capture device (117) which is designed to capture the image (201) of the load carrier (120).

6. Industrial truck or industrial robot according to Claim 5, wherein the industrial truck or the industrial robot is designed to autonomously determine a movement route of the industrial truck or the industrial robot on the basis of the identification of the load carrier (120).

7. Method (300) for identifying a load carrier (120) of a multiplicity of load carriers in an industrial environment (100), in particular a warehouse, wherein each load carrier (120) is provided with an identification code, in particular an optical identification code (121), which assigns an identity to the respective load carrier (120), wherein the method (300) comprises:
receiving (301) an image (201) of the load carrier (120) of the multiplicity of load carriers from an image capture device (117);
determining (303) a feature vector of the load carrier (120) on the basis of the image (201) of the load carrier (120);
providing (305) a respective reference feature vector for each of the multiplicity of load carriers;
determining (307) the identity of the load carrier (120) on the basis of a comparison (217) between the feature vector and the multiplicity of reference feature vectors;
determining a pose of the load carrier (120) on the basis of the image (201) of the load carrier (120);
determining the feature vector of the load carrier (120) on the basis of the image (201) of the load carrier (120) and the pose of the load carrier (120);
providing a respective reference feature vector for a reference pose of the respective load carrier (120) for each of the multiplicity of load carriers;
determining the feature vector of the load carrier (120) on the basis of the image (201) of the load carrier (120) and the pose of the load carrier (120) for the reference pose; and
determining, for a load carrier (120) that has not yet been detected, a reference feature vector of the load carrier (120) that has not yet been detected on the basis of an image (201) of the load carrier (120) that has not yet been detected and storing an identity assigned by the identification code, in particular the optical identification code (121), together with the reference feature vector of the load carrier (120) that has not yet been detected in the memory (115, 155).

## Revendications

1. Système (110, 150) destiné à identifier un porteur de charge (120) d'une pluralité de porteurs de charge dans un environnement industriel (100), en particulier un entrepôt de marchandises, chaque porteur de charge (120) étant pourvu d'un code d'identification, en particulier d'un code d'identification optique (121), lequel attribue une identité au porteur de charge (120) respectif, le système (110, 150) comprenant :
une interface de communication (113, 153), laquelle est configurée pour obtenir une image (201) du porteur de charge (120) de la pluralité de porteurs de charge à partir d'un dispositif de capture d'image (117) ;
un processeur (111, 151), lequel est configuré pour déterminer un vecteur caractéristique du porteur de charge (120) sur la base de l'image (201) du porteur de charge (120) ; et
une mémoire (115, 155), laquelle est configurée pour fournir un vecteur caractéristique de référence pour chacun de la pluralité de porteurs de charge ;
le processeur (111, 151) étant en outre configuré pour déterminer l'identité du porteur de charge (120) sur la base d'une comparaison (217) entre le vecteur caractéristique et la pluralité de vecteurs caractéristique de référence,
le processeur (111, 151) étant configuré pour déterminer en plus une pose du porteur de charge (120) sur la base de l'image (201) du porteur de charge (120) et pour déterminer le vecteur caractéristique du porteur de charge (201) sur la base de l'image (120) du porteur de charge (120) et de la pose du porteur de charge (120), et
la mémoire (115, 155) étant configuré pour fournir un vecteur caractéristique de référence respectif pour une pose de référence du porteur de charge (120) respectif pour chacun de la pluralité de porteurs de charge, et le processeur (111, 151) étant configuré pour déterminer le vecteur caractéristique du porteur de charge (120) pour la pose de référence sur la base de l'image (201) du porteur de charge (120) et de la pose du porteur de charge (120),
le processeur (111, 151) étant en outre configuré pour déterminer, pour un porteur de charge (120) non encore capturé, un vecteur caractéristique de référence du porteur de charge (120) non encore capturé sur la base d'une image (201) du porteur de charge (120) non encore capturé, et pour enregistrer dans la mémoire (115, 155) une identité attribuée par le code d'identification, notamment le code d'identification optique (121), conjointement avec le vecteur caractéristique de référence du porteur de charge (120) non encore capturé.

2. Système (110, 150) selon la revendication 1, le processeur (111, 151) étant configuré pour mettre en œuvre un réseau neuronal, le réseau neuronal étant configuré pour déterminer le vecteur caractéristique du porteur de charge (120) sur la base de l'image (201) du porteur de charge (120).

3. Système (110, 150) selon la revendication 2, le réseau neuronal étant en outre configuré pour déterminer l'identité du porteur de charge (120) sur la base d'une comparaison (217) entre le vecteur caractéristique et la pluralité de vecteurs caractéristique de référence.

4. Système (110, 150) selon l'une des revendications précédentes, le code d'identification optique (121) étant un code matriciel ou un code à barres.

5. Chariot de manutention ou robot de manutention comprenant un système (110, 150) selon l'une des revendications précédentes, le chariot de manutention ou le robot de manutention comprenant en outre un dispositif de capture d'image (117), lequel est configuré pour capturer l'image (201) du porteur de charge (120).

6. Chariot de manutention ou robot de manutention selon la revendication 5, le chariot de manutention ou le robot de manutention étant configuré pour déterminer de manière autonome un itinéraire de déplacement du chariot de manutention ou du robot de manutention sur la base de l'identification du porteur de charge (120).

7. Procédé (300) destiné à identifier un porteur de charge (120) d'une pluralité de porteurs de charge dans un environnement industriel (100), en particulier un entrepôt de marchandises, chaque porteur de charge (120) étant pourvu d'un code d'identification, en particulier d'un code d'identification optique (121), lequel attribue une identité au porteur de charge (120) respectif, le procédé (300) comprenant :
obtention (301) d'une image (201) du porteur de charge (120) de la pluralité de porteurs de charge à partir d'un dispositif de capture d'image (117) ;
détermination (303) d'un vecteur caractéristique du porteur de charge (120) sur la base de l'image (201) du porteur de charge (120) ;
fourniture (305) d'un vecteur caractéristique de référence respectif pour chacun de la pluralité de porteurs de charge ;
détermination (307) de l'identité du porteur de charge (120) sur la base d'une comparaison (217) entre le vecteur caractéristique et la pluralité de vecteurs caractéristiques de référence ;
détermination d'une pose du porteur de charge (120) sur la base de l'image (201) du porteur de charge (120) ;
détermination du vecteur caractéristique du porteur de charge (120) sur la base de l'image (201) du porteur de charge (120) et de la pose du porteur de charge (120) ;
fourniture d'un vecteur caractéristique de référence respectif pour une pose de référence du porteur de charge (120) respectif pour chacun de la pluralité de porteurs de charge ;
détermination du vecteur caractéristique du porteur de charge (120) sur la base de l'image (201) du porteur de charge (120) et de la pose du porteur de charge (120) pour la pose de référence ; et
détermination, pour un porteur de charge (120) non encore capturé, un vecteur de caractéristique de référence du porteur de charge (120) non encore capturé sur la base d'une image (201) du porteur de charge (120) non encore capturé et enregistrement dans la mémoire (115, 155) d'une identité attribuée par le code d'identification, notamment le code d'identification optique (121), conjointement avec le vecteur caractéristique de référence du porteur de charge (120) non encore capturé.
